Europäisches Patentamt

European Patent Office

Office européen des brevets

(19)

(11) **EP 1 605 419 A1**

(12) **EUROPEAN PATENT APPLICATION**
published in accordance with Art. 158(3) EPC

(43) Date of publication:
**14.12.2005 Bulletin 2005/50**

(51) Int Cl.⁷: **G08G 1/13**

(21) Application number: **04721321.0**

(22) Date of filing: **17.03.2004**

(86) International application number:
**PCT/JP2004/003550**

(87) International publication number:
**WO 2004/084153 (30.09.2004 Gazette 2004/40)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **17.03.2003 JP 2003071737**

(71) Applicant: **MATSUSHITA ELECTRIC INDUSTRIAL CO., LTD.**
**Kadoma-shi, Osaka 571-8501 (JP)**

(72) Inventor: **ADACHI, Shinya**
**(JP)**

(74) Representative:
**Pautex Schneider, Nicole Véronique et al**
**Novagraaf International SA**
**25, Avenue du Pailly**
**1220 Les Avanchets - Geneva (CH)**

(54) **METHOD AND DEVICE FOR TRANSMITTING A RUN TRACE IN PROBE CAR SYSTEM**

(57)     An object of the invention is to provide a method of transmitting travelingpath data that is capable of transmitting a traveling path accurately with a small data amount in a probe car system. An FCD in-vehicle device in the invention resamples a travel path traveled while measuring its position with a resampling segment length that is set by associating it with a range of road curvature, represents positional information of a sampling point by a statistically biased parameter, and variable-length-encodes this parameter value in transmitting it to an FCD collection apparatus. The FCD collection apparatus decodes received data to reproduce the positional information of the sampling point, and identifies the travel path by map matching using this positional information. The data amount of traveling path can be considerably reduced by encoding. Moreover, a center can accurately keep track of the traveling path because, when a probe car travels a road with sharp bends, the interval between sampling points is set short.

FIG. 4

**Description**

TECHNICAL FIELD

The present invention relates to a probe car system in which information that a probe car in traveling has measured is collected by a center and utilized, a method of transmitting traveling path data of a probe car, and an apparatus for implementing the method. More particularly, the invention seeks to reduce an information amount related to travel paths of a probe car and to eliminate erroneous transmission.

BACKGROUND ART

In recent years, introduction of probe car system (also referred to as "floating car data (FCD) system") using a traveling vehicle as a sensor (probe) for collecting traffic information has been investigated.

In this system, an FCD in-vehicle device mounted on the traveling vehicle records a traveling path, and the device also measures and accumulates its speed, fuel consumption, and the like; then the device transmits the traveling path and the measurement information to a center with predetermined timing. In the center, a road segment at which the measurement information is measured is identified from the traveling path, and the measurement information sent from each vehicle is analyzed for use in generating road traffic information.

Patent Reference 1 (JP-A-2002-269669) describes a probe car system as follows. A center specifies an area for collecting FCD. FCD in-vehicle devices on the vehicles traveling in the area measure and accumulate such data as traveling position, time, and traveling speed, and they transmit accumulated travel paths and measured data at measurement locations using mobile telephones to a center at each given time.

With the center of this system, although it is desired to obtain information for a road segment that is as long as possible, a problem arises, however, that when the data amount of travel paths and measurement information becomes large, communication time of FCD in-vehicle devices increases, piling up communication charges. Therefore, an issue is, in what way the data amount of information to be transmitted should be reduced without reducing information accuracy.

The invention resolves such problems in the past, and it is an object of the invention to provide a method of transmitting traveling path data that is capable of transmitting a traveling path accurately with a small data amount, and to provide a probe car system and an apparatus for implementing the method.

DISCLOSURE OF THE INVENTION

In view of this, the invention provides a traveling path transmitting method of transmitting a traveling path from an FCD in-vehicle device to an FCD collection apparatus (center), in which: the FCD in-vehicle device resamples a travel path that has been traveled while measuring positions at a resampling segment length that has been set to be associated with a road shape, represents positional information of sampling points by statistically biased parameters, variable-length-encodes the parameter values and transmits the values to the FCD collection apparatus; and the FCD collection apparatus reproduces the positional information of the sampling points by decoding received data.

This makes it possible to considerably reduce the data amount of travel paths by encoding. In addition, the intervals between sampling points is set according to road shapes; therefore, when a probe car travels a road with a sharp bend, the sampling point interval becomes short, making it possible to reproduce the traveling path at the center accurately.

Moreover, according to a traveling path transmitting method of the invention, the FCD in-vehicle device attaches an identification flag to a value that is apt to cause mismatching among parameters and transmits the value to the FCD collection apparatus.

For this reason, it is possible to prevent such a situation that a traveling path is erroneously determined on the center side.

In addition, a probe car systemof the invention comprises: an FCD in-vehicle device that resamples a travel path traveled while measuring positions with a resampling segment length associated with a road shape, represents positional information of sampling points by statistically biased parameters, and variable-length-encodes and transmits the parameter values; and an FCD collection apparatus that reproduces the positional information of the sampling points by decoding received data received from the FCD in-vehicle device.

The FCD in-vehicle device of this system can transmit a traveling path accurately to the FCD collection apparatus with a small data amount.

An FCD in-vehicle device of the invention comprises: present vehicle position detectingmeans for detecting a present position; accumulating means for accumulating positional data of a travel path measured by the present vehicle position detecting means; resampling segment length determining means for determining a resampling segment length in resampling the travel path; traveling path resampling processing means for resampling the travel path with the resampling segment length determined by the resampling segment length determining means and computing positional data of sampling points; encoding means for representing the positional data of the sampling point by statistically biased parameters and variable-length-encoding the parameter values; and traveling path transmitting means for transmitting the encode data to an FCD collection apparatus.

This FCD in-vehicle device can set a resampling segment length with associating it with a road curvature or the like.

BRIEF DESCRIPTION OF THE DRAWINGS

Fig. 1 is an explanatory view for explaining a method of transmitting a traveling path according to a first embodiment of the invention;

Figs. 2A to 2C are views illustrating how to represent traveling path data in the first embodiment of the invention, and Fig. 2D is a view illustrating data occurrence distribution;

Fig. 3 is a figure showing a code table used in the first embodiment of the invention;

Fig. 4 is a block diagram showing the configuration of a probe car system according to the first embodiment of the invention;

Fig. 5 is a data configuration diagram showing traveling path data transmitted in the first embodiment of the invention;

Fig. 6 is an explanatory view for explaining a method of transmitting a travelingpath according to a second embodiment of the invention;

Fig. 7A is a view for illustrating a case in which an identification is attached in the second embodiment of the invention, and Fig. 7B is a view for illustrating a case in which an identification is not attached in the second embodiment of the invention;

Fig. 8 is a figure showing a code table used in the second embodiment of the invention;

Fig. 9 is a block diagram showing the configuration of a probe car system according to the second embodiment of the invention;

Fig. 10 is a flowchart illustrating an identification flag attaching procedure in the second embodiment of the invention;

Fig. 11 is a block diagram showing the configuration of a probe car system according to the third embodiment of the invention;

Fig. 12 is a flowchart showing the operation of the probe car system according to the third embodiment of the invention;

Fig. 13A is a diagram illustrating a data structure of encoding instruction information transmitted from an FCD collection apparatus to an FCD in-vehicle device in the third embodiment of the invention; and Fig. 13B is a diagram illustrating a data structure of traveling path information transmitted from the FCD collection apparatus to the FCD in-vehicle device; and

Fig. 14 is another method for determining resampling segment length in the first embodiment of the invention.

Reference numerals in the drawings respectively denote the following:

10 -- FCD collection apparatus; 11 -- traveling path receiving section; 12 -- encoded data decoding section; 13 --traveling path measurement information utilizing section; 14 -- code table data; 15 -- code table selecting section; 16 --code table transmitting section; 17 --in-vehicle-device-positional-information receiving section; 20 -- FCD in-vehicle device; 21 -- traveling path transmitting section; 22 -- encoding process section; 23 -- code table; 24 -- travelingpath resampling processing section; 25 -- traveling path measurement information accumulating section; 26 --present car position determining means; 27 -- resampling length determining section; 28 -- map database; 31 -- GPS antenna; 32 -- gyro; 33 -- sensor A; 34 -- sensor B; 35 -- sensor C; 41 -- traveling path & resampling-segment deviation-angle absolute-value cumulative-value computing section; 42 --traveling path & resampling-segment deviation-angle absolute-value difference determining section; 43 -- code table receiving section; 44 -- present-position-information and in-vehicle-device-type transmitting section; 50 -- code table creating section; 51 -- code table computing section; 52 --past traveling path data; and 53 -- code table data.

BEST MODE FOR CARRYING OUT THE INVENTION

First Embodiment

In a probe car system according to a first embodiment of the invention, an FCD in-vehicle device subjects traveling path data including a data string of positional data for each given distance to compression encoding and transmits the data together with measurement information to a center. The center that has received these restores the data string of positional data that indicates the traveling path by decoding the data that has been subj ected to the compres sion encoding, and performs map matching between the traveling path data and its own digital map data to identify the road segment at which the measurement information has been measured.

The compression encoding for traveling path data is performed in the following manner.

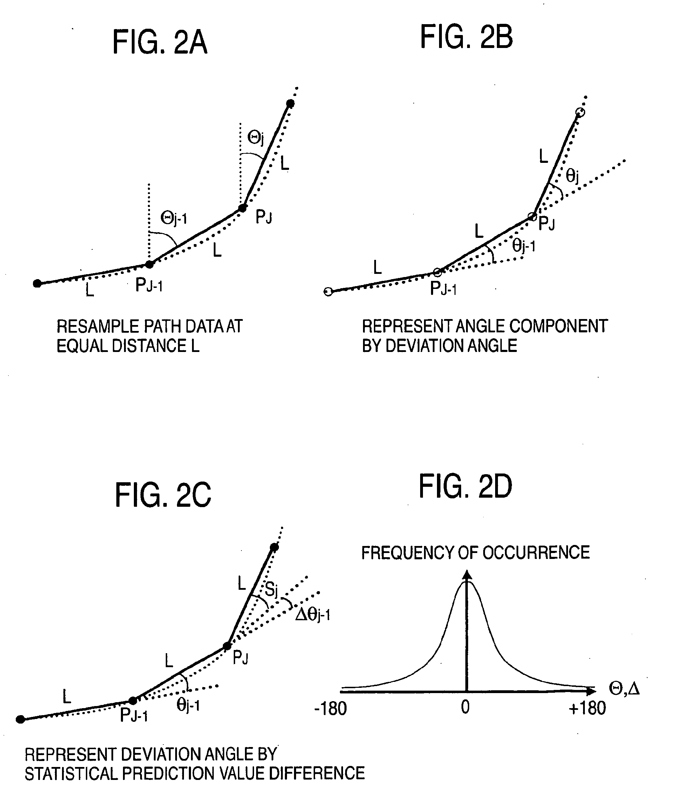

The FCD in-vehicle device detects a current position, for example, at each 1 second utilizing a GPS and accumulates the data, and the device resamples positional data at each given distance L (for example, 200 m). In Fig. 2A, sampling points on a road that have been set by resampling are represented as PJ-1 and PJ. Thissamplingpoint (PJ) canbeuniquelyidentified by two dimensions, a distance L from an adjacent sampling point (PJ-1) and angle $\Theta$, and if the distance is assumed to be invariable (L), the sampling point (PJ) can be represented by only one variable, an angle component $\Theta$ from the adjacent sampling point (PJ-1). In Fig. 2A, as for this angle $\Theta$, an angle $\Theta$ is indicated by "absolute orientation", in which the magnitude is designated clockwise in the range of 0 to 360 degrees with the direction of true north (the upward direction of the figure) defined as 0 degree. The angle $\Theta_{J-1}$ can be computed by the following equation, where the xy coordinates of PJ-1 and PJ are (xj-1, yj-1) and (xJ, yJ).

$$\Theta_{j-1} = \tan^{-1}\{(x_j - x_j - 1)/(y_j - y_j - 1)\}$$

Accordingly, a traveling path can be represented by a data string of angle components of respective sampling points by separately presenting a given distance L between sampling points and the latitude and longitude of a sampling point (reference point) that is the starting end or the terminal end.

In order to reduce the data amount of traveling path data, it is necessary to reduce the data amount in this data string of the angle components. Therefore, the angle components are converted into statistically biased data, and the converted data are variable-length-encoded.

Although there are many kinds of variable length encoding methods, such as a fixed number compression method (zero compression or the like), the Shannon-Fano coding method, the Huffman coding method, an arithmetic coding method, and a dictionary method, a case in which the most popular Huffman coding method is used is described herein.

For variable length encoding, angle components are represented, as shown in Fig. 2B, by displacement differences from the absolute orientation, that is, "deviation angle" $\theta_j$. This deviation angle $\theta_j$ can be computed as:

$$\theta_j = \Theta_j - \Theta_{j-1}.$$

Deviation angles $\theta$ of sampling points are concentrated on the vicinity of 0 when the road is straight-lined, resulting in statistically biased data.

In addition, the angle components of sampling points can be converted into statistically biased data by, as shown in Fig. 2C, by representing a deviation angle $\theta_j$ of the subject sampling point by a difference value (statistically predicted value difference) $\Delta\theta_j$ of the sampling point from a deviation angle predicted value $S_j$ (statistically predicted value) that is predicted using deviation angles $\theta_{j-1}$, $\theta_{j-2}$, ... etc. of previous sampling points. The statistically predicted value $S_j$ may be defined as, for example:

$$S_j = \theta_j - 1,$$

or

$$S_j = (\theta_{j-1} + \theta_{j-2})/2.$$

Alternatively, the weightedmean of deviation angles of previous n number of sampling points may be defined as $S_j$. The statistically predicted value difference $\Delta\theta_j$ of deviation angle can be computed as:

$$\Delta\theta_j = \theta_j - S_j.$$

The statistically predicted value differences $\Delta\theta$ of deviation angles of sampling points are concentrated on the vicinity of 0 when the road bends with a given curvature, resulting in statistically biased data.

Fig. 2D shows the frequency of the data, represented in a graph, of the case in which the traveling path of a probe car that has traveled an urban area, in which there are many straight-lined roads, is denoted by deviation angle $\theta$, and the case in which the traveling path of a probe car that has traveled a normal area is denoted by statistically predicted value differences $\Delta\theta$. The frequency of occurrence of $\theta$ and $\Delta\theta$ shows maximum values at $\theta = 0°$, and is statistically biased.

In this way, if the frequency of occurrence of data can be biased, the total data amount can be reduced by applying variable length encoding, in which the data having a high frequency of occurrence are encoded with a less bit number whereas the data having a low frequency of occurrence are encoded with a greater bit number.

The FCD in-vehicle device carries out encoding of a data string of statistically biased angle components using a pre-stored code table (which may alternatively be one given from the center according to a present car position).

Now, assume that a string of $\Delta\theta$, represented with 1° as a unit, is:

"0_0_-2_0_0_ +1_0_0_-1_0_+ 5_0_0_0_+1_0".

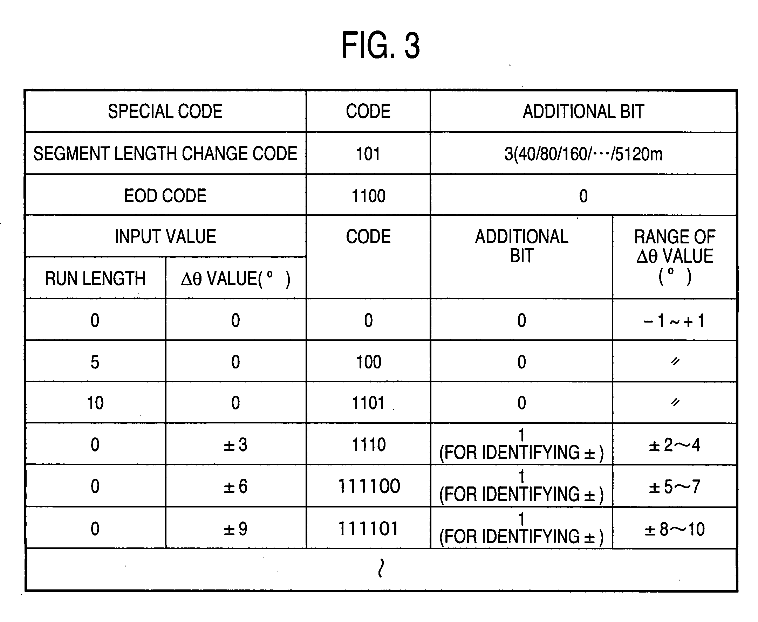

Also, the following describes a case in which a code table shown in Fig. 3, in which variable length encoding and run length coding (run length encoding) are combined, is used in order to encode this data string. This code table specifies the following: $\Delta\theta$ within the range of -1° to +1° is regarded as 0° and represented by a code "0"; when 0° continues 5 times, it is represented by a code "100", and when 0° continues 10 times, it is represented by a code "1101". The code table also specifies the following: $\Delta\theta$ within the range of $\pm2°$-4° is defined as $\pm3°$ and represented by a code "1110" with an additional bit "0" added when $\Delta\theta$ is positive and with an additional bit "1" added when $\Delta\theta$ is negative; $\Delta\theta$ within the range of $\pm5°$-7° is regarded as $\pm6°$ and represented by a code "111100" with an additional bit that indicates whether it is positive or negative; and $\Delta\theta$ within the range of $\pm8°$-10° is regarded as $\pm9°$ and represented by a code "111101" with an additional bit indicating whether it is positive or negative.

Accordingly, the foregoing data string is encod-

ed as follows:

"0_0_11101_100_0_0_1111000_100"

→ "0011101100001111000100".

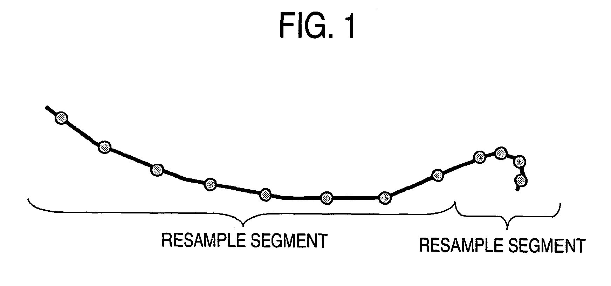

Nevertheless, if the sampling point interval (resampling segment length) in resampling is fixed to be a given distance L, such inconvenience as follows arises in the case where a traveling path of the FCD in-vehicle device contains gentle bend segments having small curvatures and sharp bend segments having large curvatures as shown in Fig. 1.

Resampling sharp bend segments with a relatively long resampling segment length L, which is suitable for gentle bend segments, makes the center side difficult to accurately track travel paths with sharp bend segments and increases the possibility of mismatching to occur. On the other hand, resampling gentle bend segments with a short resampling segment length L, with which can the center side can reproduce sharp bend segments, increases the number of sampling points unnecessarily, increasing the data amount.

In order to eliminate such inconvenience, the FCD in-vehicle device changes the resampling segment length step by step according to the curvature of the road shape and thereby sets the resampling segment length in sharp bend segments shorter than that in other segments, as shown in Fig. 1.

The FCD in-vehicle device sets the resampling segment length in the following manner.

The FCD in-vehicle device identifies the road in traveling by map-matching current positions measured at each 1 second onto its own digital map, and sets a resampling segment length, using a table that specifies the relationship between ranges of road curvatures and resampling segment lengths (the higher the level of road curvature is, the shorter the resampling segment length).

The FCD in-vehicle device computes the cumulative value of absolute values of steering-wheel-steered angles (steering angles) for a unit segment (about 500 m to 1000 m), and sets a resampling segment length from the computed cumulative value of steering angle absolute values, using a table that specifies the relationship between cumulative values of steering angle absolute values and resampling segment lengths (the higher the level of cumulative value of steering angle absolute value is, the shorter the resampling segment length) .

The FCD in-vehicle device computes a cumulative value of deviation angle absolute values in a traveling path of a unit segment (about 500 m to 1000 m), and sets a resampling segment length from the computed cumulative value of deviation angle absolute values, using a table that specifies the relationship between ranges of cumulative values of deviation angle absolute values and resampling segment lengths (the higher the level of the cumulative value of deviation angle absolute values is, the shorter the resampling segment length).

Vehicle speed and road curvature are related; when a road curvature is large, a vehicle cannot travel at high speed. Therefore, in the case where the vehicle speed is high, the resampling segment length may be set long. Additionally, when a vehicle travels along a sharp bend, a G force is applied in a lateral direction. For this reason, it is also possible to provide the vehicle with a lateral G sensor and to set a resampling segment length according to the detection level of the sensor.

When the FCD in-vehicle device changes the resampling segment length, the FCD in-vehicle device inserts a segment length change code specified by the code table (Fig. 3) and an additional bit indicating a resampling segment length into the data string of encoded $\Delta\theta$. The position of the insertion is a position that precedes the $\Delta\theta$ corresponding to the first sampling point that is after the change of the resampling segment length.

In this code table (Fig. 3), $2n \times 40$ m (n = 0, 1, ... , 8) may be adopted for the resampling segment length, and the additional bit represents the n value with 3 bits. In addition, an EOD (end of data) code specified by the code table (Fig. 3) is inserted at the end of the data string of encoded $\Delta\theta$.

The FCD in-vehicle device transmits the traveling path data that has been variable-length-coded to the center together with measurement information. The center decodes the traveling path data using the same code table as that of the FCD in-vehicle device and identifies the road segment at which the measurement information has been measured.

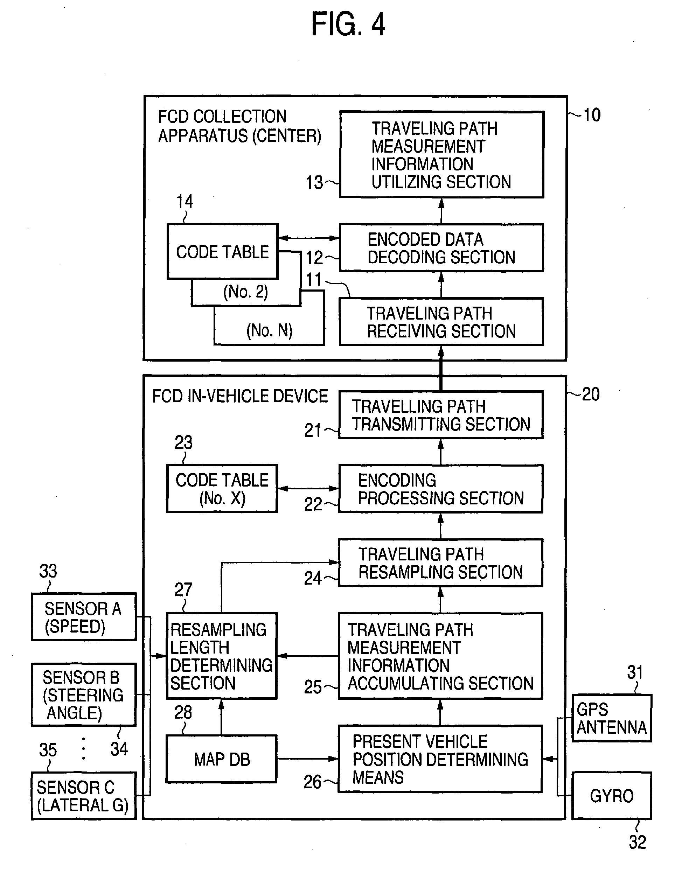

Fig. 4 shows, among the configurations of this probe car system, a block that relates to encoding of traveling path data.

This system comprises an FCD in-vehicle device 20 that measures data in traveling and offers the data together with encoded traveling path data, and an FCD collection apparatus (center) 10 that collects these data. The FCD in-vehicle device 20 has: a present vehicle position determining means 26 that detects a present vehicle position using GPS information received by a GPS antenna 31 and information from gyro 32; a traveling path measurement information accumulating section 25 that accumulates present car's traveling path and measurement information such as speed and fuel consumption; a resampling length determining section 27 that determines a resampling segment length of the traveling path; a map database 28 that the resampling length determining section 27 uses for map matching; a sensor A 33 that detects speed, a sensor B 34 that detects steering angle, and a sensor C 35 that detects lateral G, which provide their detected information to the resampling length determining section 27; a traveling path resampling processing section 24 that performs resampling with a determined resampling segment length and generates sampling data of the traveling path; an encoding processing section 22 that encodes the sampling data of the traveling path using the code table 23; and a traveling path transmitting section 21 that transmits the encoded data to the FCD collection apparatus 10.

On the other hand, the FCD collection apparatus 10 has: a traveling path receiving section 11 tat receives the traveling path data from the FCD in-vehicle device 20; an encoded data decoding section 12 that decodes the received data using a code table data 14; and a traveling path measurement information utilizing section 13 that utilizes the measurement information of the traveling path that has been restored.

The FCD collection apparatus 10 prepares and retains code tables 14 by respective areas, used for variable length encoding of traveling path data, in advance.

The FCD in-vehicle device 20 notifies the FCD collection apparatus 10 of the present vehicle position detected by the present vehicle position determining means 26, and upon receiving this information, the FCD collection apparatus 10 selects a code table 14 for the area in which the FCD in-vehicle device 20 is located and sends the code table data and an instruction about an encoding method (an instruction about which of deviation angle $\theta$ or statistically predicted value difference $\Delta\theta$ should be used for representing positions, the initial value of resampling segment length, and so forth) to the FCD in-vehicle device 20.

In the FCD in-vehicle device 20, which has started measuring the measurement information, the present vehicle position determining means 26 detects a current position at, for example, each 1 second using the received information from the GPS antenna 31 and the information from the gyro 32, and the traveling path measurement information accumulating section 25 accumulates the traveling path data. In addition, the measurement information that has been measured, such as speed, engine load, and gasoline consumption, are associated with the data of their measurement positions and accumulated in the traveling path measurement information accumulating section 25.

The resampling length determining section 27 determines a resampling segment length based on the road curvature in traveling that has been read from the map database 28, the speed detected by the sensor A 33, the cumulative value of steering angle absolute values detected by the sensor B 34, the lateral G detected by the sensor C 35, and the like. The method for this is as described previously.

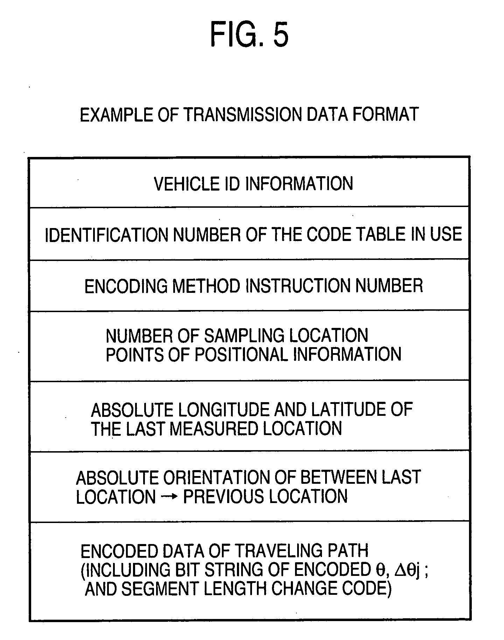

The traveling path resampling processing section 24 resamples the traveling path accumulated in the traveling path measurement information accumulating section 25 with the resampling segment length determined by the resampling length determining section 27, and sets sampling data. The encoding processing section 22 encodes the data string of the sampling data using the code table 23, and the traveling path transmitting section 21 transmits the encoded traveling path data and the measurement information to the FCD collection apparatus 10 at information transmission timing. Fig. 5 shows an example of data format of the traveling path data transmitted from the FCD in-vehicle device 20 to the FCD collection apparatus 10.

The FCD collection apparatus 10 receives the data with the traveling path receiving section 11. The encoded data decoding section 12 decodes the encoded traveling path data using an applicable code table 14. The traveling path measurement information utilizing section 13 performs map matching with its own map data (not shown) using the decoded traveling path sampling data, identifies the road segment at which the measurement information has been measured, and utilizes the measurement information for generation, analysis, etc. of traffic information.

With this system, since the FCD in-vehicle device 20 resamples travel paths with a resampling segment length according to road curvatures and generates encoded data, it is possible to reduce the data amount of data transmitted from the FCD in-vehicle device 20 to the FCD collection apparatus 10, and moreover, the FCD collection apparatus 10 can accurately identify the road segment at which the measurement information has been measured without causing mismatches.

It should be noted that although a case in which the FCD collection apparatus 10 instructs the FCD in-vehicle device 20 on code tables and encoding methods has been described here, the FCD in-vehicle device 20 may determine a code table and an encoding method itself.

In addition, a fixed number compression method, the Shannon-Fano coding method, the Huffman coding method, an arithmetic coding method, a dictionary method, or the like may be used as the variable length encoding method, other than the Huffman coding method. When the arithmetic coding method or the dictionary method is used, code tables are not necessary.

Furthermore, it is possible that the FCD collection apparatus 10 may decode the encode traveling path data received from the FCD in-vehicle device 20, and it may offer the data, as they are, as traffic information (in this case, the side that receives the traffic information carried out map matching and identifies the road) or may statistically utilize the data.

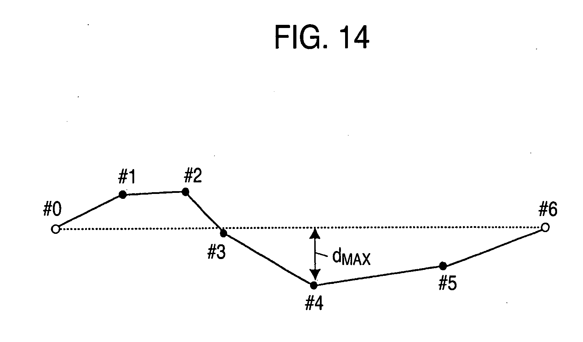

Further, although a case in which the resampling segment length is changed according to road curvature has been described here, it is also possible that, as shown in Fig. 14, distances from the straight-lined line connecting nodes (#0, #6) to respective interpolation points (#1, #2, #3, #4, #5) that indicate the shape of the road are obtained, and based on the maximum distance (dMAX) among them, a resampling segment length may be determined.

Second Embodiment

In a probe car system according to a second embodiment of the invention, an FCD in-vehicle device attaches a flag to a sampling data with high mismatching possibility in transmitting traveling path data to an FCD collection apparatus.

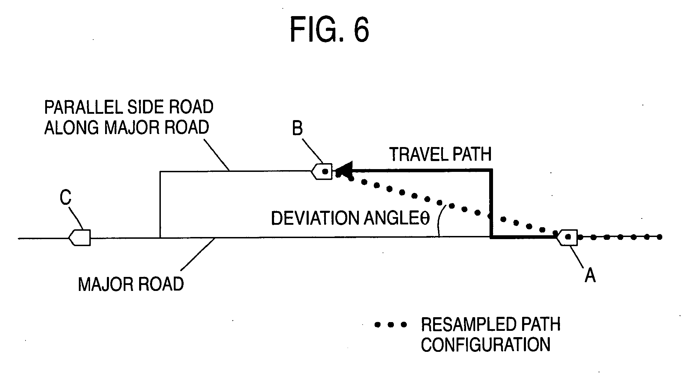

For example, as shown in Fig. 6, assume that a probe car that was traveling a major road travels a parallel side road along the major road and returns to the major road; and points A, B, and C are set as the sampling points through resampling. In Fig. 6, the travel path from A to B is indicated by a bold line, and the resampled traveling path is indicated by a dotted line.

If the positional data of these sampling points are represented by deviation angle θ and the traveling path data are transmitted to an FCD collection apparatus, it is highly likely that the FCD collection apparatus mismatches the sampling point B onto the major road. This mismatch leads to an error of the subj ect road segment at which the measurement information is measured by the FCD in-vehicle device.

To prevent such an error, the FCD in-vehicle device performs the following process.

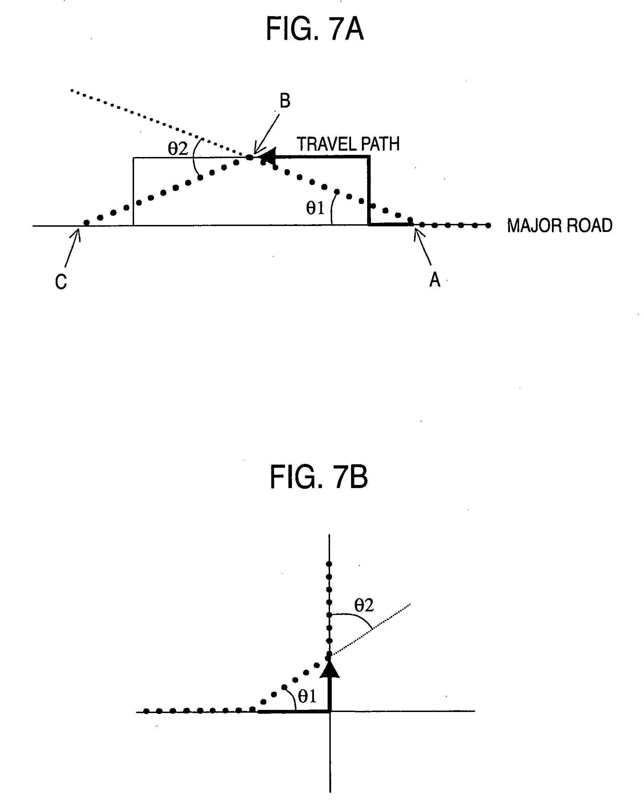

As shown in Fig. 7A, the FCD in-vehicle device actually travels a link frompoint A to point B, which have been resampled, while measuring the present vehicle position at each 1 second, and computes a cumulative value $\alpha$ of deviation angle absolute values in the travel path from point A to point B from the positional information at each measurement point on the travel path (bold line). In the case of Fig. 7A, this cumulative value $\alpha$ of deviation angle absolute values is 180°.

In addition, the FCD in-vehicle device adds a deviation angle θ1 and a deviation angle θ2 of respective sampling points A and B, which are sampling points preceding and following this link, to compute its absolute value $|θ1 + θ2|$.

Then, the FCD in-vehicle device compares $|θ1 + θ2|$ with the cumulative value $\alpha$ of deviation angle absolute values of the link, and adds an identification flag that indicates that "angles between the two do not match" to the sampling data if the difference is greater than a predetermined threshold value, sampling point B.

In the case of Fig. 7A,

$$|θ1 + θ2| \neq \alpha$$

results, and therefore, an identification flag is attached to the deviation angle θ2 of the sampling point B. On the other hand, in the case of Fig. 7B,

$$|θ1 + θ2| = \alpha = 90°$$

results, and therefore, no identification flag is attached.

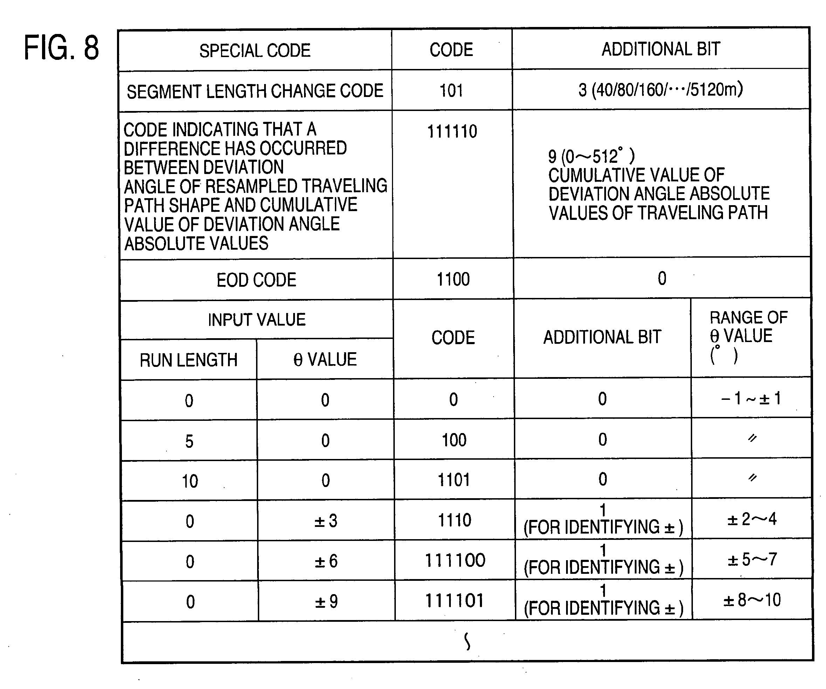

Fig. 8 shows a code table used for encoding traveling path data in this case. This code table specifies, as the identification flag, a code indicating that "a difference has occurred between the deviation angle of the resampled traveling path shape and the cumulative value of deviation angle absolute values" and an additional bit indicating the cumulative value of deviation angle absolute values of the traveling path; the foregoing code and additional bit are inserted before the applicable bit data in the encoded data of the traveling path made of the bit string of encoded θ. The rest are identical to the code table of the first embodiment.

Upon receiving a traveling path data in which this identification flag is inserted, the FCD collection apparatus searches one in the surrounding links whose cumulative value of deviation angle absolute values matches "the cumulative value of deviation angle absolute values of the traveling path" of the additional bit, and identifies the subject road in which the measurement information has been measured.

Additionally, in this case, the following is possible: the deviation angle of the links preceding or following the sampling point to which an identification flag is attached is checked, and if there is inconsistency, it is highly likely that mismatch has occurred, so it is determined that the measurement information for the applicable resampling segment is not utilized. In this case, the additional bit is not essential. It is very rare that a vehicle travels a parallel side road along a major road other than in special locations (for example, where a national road has a crank shape), and therefore, it is thought that practically no problem arises even if the data is discarded other than at predetermined special locations.

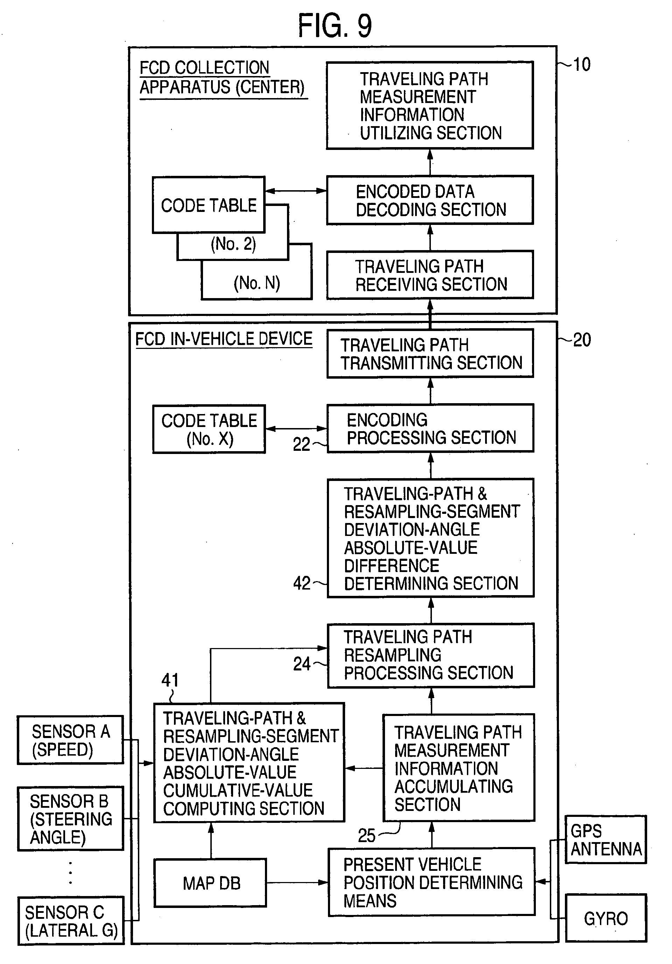

Fig. 9 shows the configuration of this probe car system. An FCD in-vehicle device 20 of this system comprises : a traveling path & resampling-segment deviation-angle absolute-value cumulative-value computing section 41 that computes a cumulative value of deviation angle absolute values of the actual traveling path and a deviation angle total value of a resampling segment; and a traveling path & resampling-segment deviation-angle absolute-value difference determining section 42 that determines whether to add an identification flag from the difference between the cumulative value of deviation angle absolute values of traveling path and the deviation angle total value of the resampling segment. The rest of the configuration is identical to that of the first embodiment (Fig. 4).

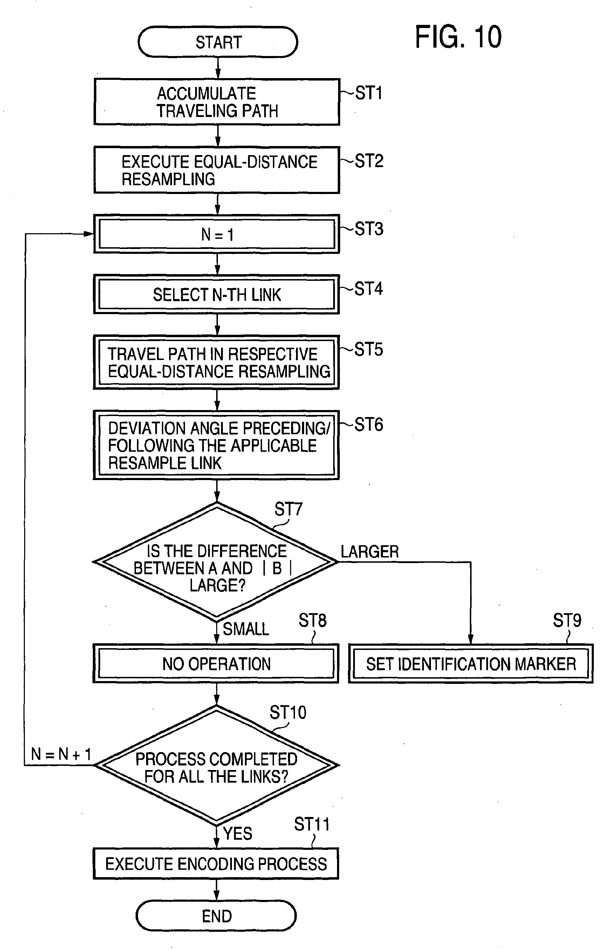

Fig. 10 shows an operation procedure of the FCD in-vehicle device 20. Travel paths are accumulated in the traveling path measurement information accumulating section 25 (step 1), and the traveling path resampling processing section 24 executes an equal-distance resampling (step 2). The traveling path & resampling-segment deviation-angle absolute-value cumulative-value computing section 41 selects links of resampling shape in sequence (steps 3 and 4), computes a cumulative value (A) of deviation angle absolute values of a travel path within each equal-distance resampling (step 5), and computes a total value (B) of deviation angles of the sampling points set preceding/following this link (step 6). The traveling path & resampling-segment deviation-angle absolute-value difference determining section 42 obtains a difference between A and |B| (step 7), and if the difference is greater than a predetermined threshold value, it sets an identification flag to the sampling data (step 9). If the difference is less than the threshold value, no action is taken (step 8) .

The traveling path & resampling-segment deviation-angle absolute-value cumulative-value computing section 41 and the traveling path & resampling-segment deviation-angle absolute-value difference determining section 42 repeat the process from step 3 to step 9 until the process is completed for all the links (step 10). When the process is completed for all the links, the encoding processing section 22 carries out an encoding process, and assigns a code specified in the code table to the sampling data to which an identification flag is attached (step 11).

Thus, in this probe car system, the FCD in-vehicle device attaches an identification flag to data that is likely to cause mismatching, and therefore, the FCD collection apparatus can prevent such errors that the measurement information measured by the FCD in-vehicle device is processed as the information for a wrong road segment.

Third Embodiment

A third embodiment of the invention describes a probe car system in which an FCD collection apparatus gives an FCD in-vehicle device instructions about a code table and an encoding method that enables efficient encoding.

When a traveling path is straight-lined, the data concentrates on the vicinity of 0 either when representing the traveling path by deviation angle θ or when representing it by statistically predicted value difference Δθ; however, the use of deviation angle θ is advantageous since the computation amount can be reduced. On the other hand, when a traveling path is curved, representing the travelingpathby statistically predicted value difference Δθ is advantageous because statistical deviation of the data can be increased.

For this reason, the FCD collection apparatus of this system conf irms the present position of the FCD in-vehicle device and gives to the FCD in-vehicle device an instruction to use the code table and encoding method with deviation angle θ when the FCD in-vehicle device is located in an urban area in which there are many straight-lined roads, whereas the FCD collection apparatus gives to the FCD in-vehicle device an instruction to use the code table and encoding method with statistically predicted value difference Δθ when it is located in amountainous area in which there are many curved-lined mountain passes. Alternatively, the FCD collection apparatus confirms the past traveling path of the FCD in-vehicle device and gives an instruction to use the code table and encoding method with deviation angle θ when it shows a straight-lined traveling path, whereas the FCD collection apparatus gives an instruction to use the code table and encoding method with statistically predicted value difference Δθ when it shows a curved-lined traveling path.

Further, judging from the present position and the traveling path of the FCD in-vehicle device, the FCD collection apparatus instructs the FCD in-vehicle device to set the resampling segment length to be short when the FCD in-vehicle device is traveling on a local street in an urban area in which there are many detours, whereas the FCD collection apparatus instructs the FCD in-vehicle device to set the resampling segment length to be long when it is traveling at a location where there are less detours, such as on expressways or major road.

Meanwhile, when the FCD in-vehicle device is of a type that detects the present vehicle position based only on GPS, the encoding method with deviation angle θ is advantageous since the fluctuation of detected positions is great; on the other hand, when the in-vehicle device is of a type that performs map matching of the present position detected with GPS on a map to determine the present vehicle position, the encoding method with statistically predicted value difference Δθ shows higher position accuracy and is therefore more advantageous. For this reason, the FCD collection apparatus of this system confirms the type of FCD in-vehicle device and gives an instruction to use the code table and encoding method with deviation angle θ when the type is a non-map type in-vehicle device, whereas the FCD collection apparatus gives an instruction to use the code table and encoding method with statistically predicted value difference Δθ when the type is a map type in-vehicle device of map matching system.

Further, the FCD collection apparatus identifies the tendency in traveling of the probe car from its past traveling path and instructs the in-vehicle device to use the encoding method with deviation angle θ and with a long resampling segment length when it has a strong tendency to traveling along a major road, whereas the FCD collection apparatus gives an instruction to use the encoding with statistically predicted value difference Δθ and with a short resampling segment length when there are many detours.

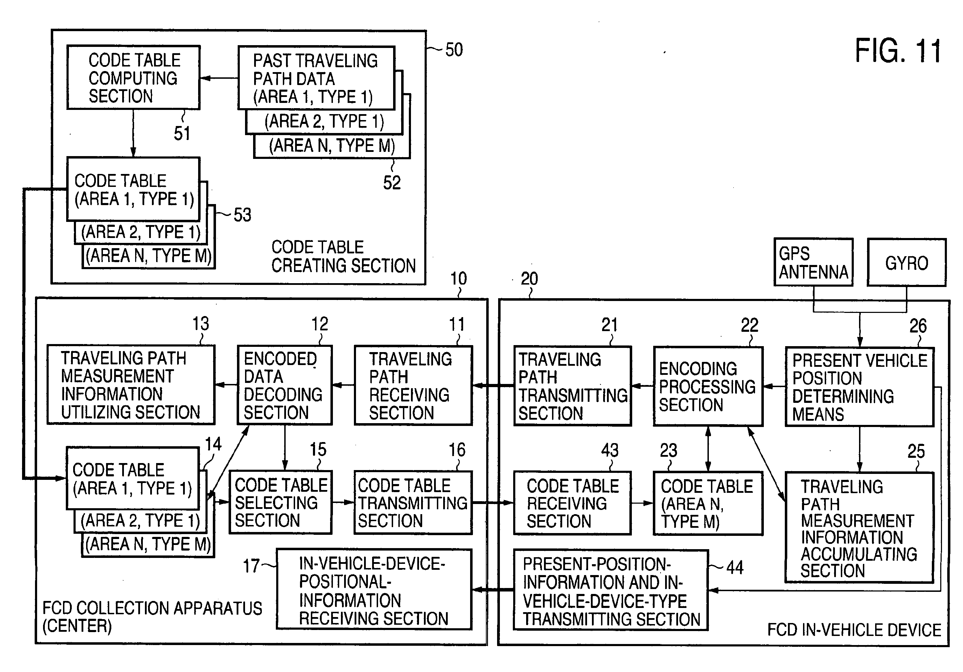

Fig. 11 shows the configuration of this probe car system. This system comprises an FCD in-vehicle device 20, an FCD collection apparatus 10, and a code table creating section 50. The FCD in-vehicle device 20 has, in addition to a present vehicle position determining means 26, a traveling path measurement information accumulating section 25, an encoding processing section 22, and a traveling path transmitting section 21: a present-position-information and in-vehicle-device-type transmitting section 44 that notifies the FCD collection apparatus 10 of a present position and a type of in-vehicle device, and a code table receiving section 43 that receives code table data 23 from the FCD collection apparatus 10.

The FCD collection apparatus 10 has, in addition to a traveling path receiving section 11, an encoded data decoding section 12, a traveling path measurement information utilizing section 13: an in-vehicle-device-positional-information receiving section 17 that receives information on the present position and the type of in-vehicle device from the FCD in-vehicle device 20; a code table selecting section 15 that selects a code table data 14 corresponding to the present position and in-vehicle device type of the FCD in-vehicle device 20 among code table data 14 created by a code table creating section 50; and

a code table transmitting section 16 that transmits an encoding method instruction and the code table data 14 selected by the code table selecting section 15 to the FCD in-vehicle device 20.

In addition, the code table creating section 50 has a code table computing section 51 that creates code table data 53 prepared according to areas and types of in-vehicle devices using past traveling path data 52 classified according to areas and types of in-vehicle devices.

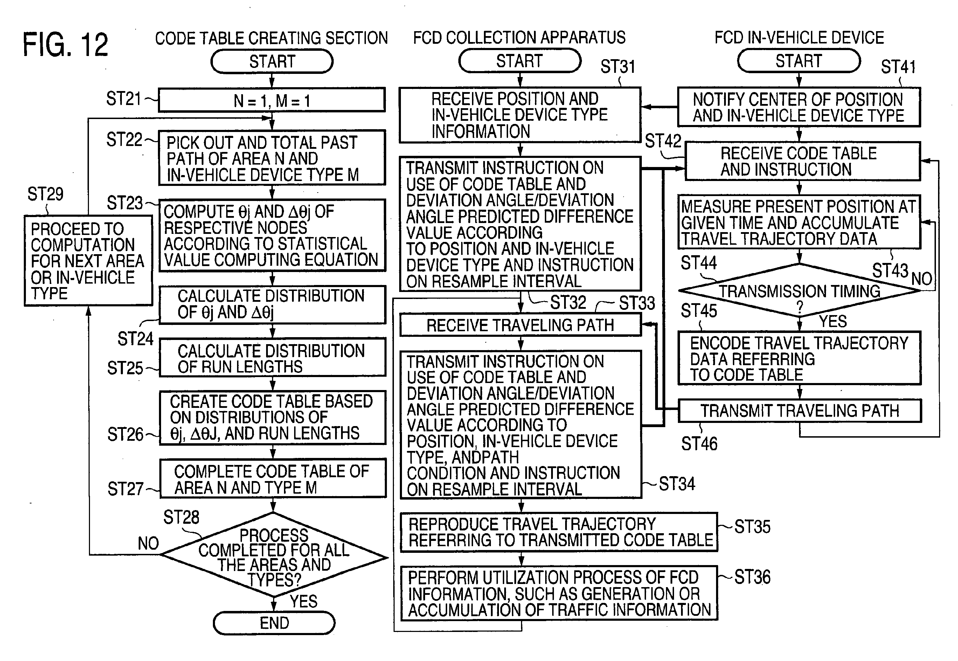

Fig. 12 shows an operation procedure of this system.

The code table computing section 51 of the code table creating section 50 sets an area N = 1 and an in-vehicle device type M = 1 as a subject (step 21), picks out and totals the past traveling path data 52 that correspond to the area and the in-vehicle device type and (step 22), and computes $\theta j$ and $\Delta\theta j$ of respective nodes (sampling points) according to the statistical value computing equations (step 23). Next, the code table computing section calculates the occurrence distribution of $\theta j$ and $\Delta\theta j$ (step 24), calculates the distribution of run lengths (step 25), and creates a code table based on the distributions of $\theta j$, $\Delta\theta j$, and run lengths (step 26). Thus, a code table corresponding to the area N and the in-vehicle device type M is completed (step 27). This process is repeated until code tables corresponding to all the areas and in-vehicle device types are completed (step 28, step 29).

The FCD in-vehicle device 20 transmits type information of the FCD in-vehicle device 20 and present positional information detected by the present vehicle position determining means 26 from the present-position-information and in-vehicle-device-type transmitting section 44 to the FCD collection apparatus 10 (step 41). Upon receiving this information, the FCD collection apparatus 10 selects the code table data 14 corresponding to the present position and the type, specifies the use of deviation angle $\theta$ or deviation angle statistical prediction value difference $\Delta\theta$, and transmits a resampling segment length together with the specified encoding instruction information to the FCD in-vehicle device 20 (step 32).

Upon receiving the code table data 23 and the encoding instruction information (step 42), the FCD in-vehicle device 20 measures the present position at each given time and accumulates the traveling path data into the traveling path measurement information accumulating section 25 (step 43). The FCD in-vehicle device identifies whether the timing for transmitting the traveling path data is reached (step 44), and if the transmission timing of the traveling path data is reached, the encoding processing section 21 encodes sampling data resampled from the traveling path data referring to the code table data 23 (step 45). The traveling path transmitting section 21 transmits the encoded traveling path data to the FCD collection apparatus 10 (step 46).

Upon receiving the traveling path data (step 33), the FCD collection apparatus 10 transmits a code table and encoding instruction information according to the position, type, and traveling path condition of the FCD in-vehicle device 20 to the FCD in-vehicle device 20 (step 34). In addition, the FCD collection apparatus restores the received traveling path data referring to the code table data 14 transmitted previously (step 35), and performs utilization processing of the FCD information (step 36).

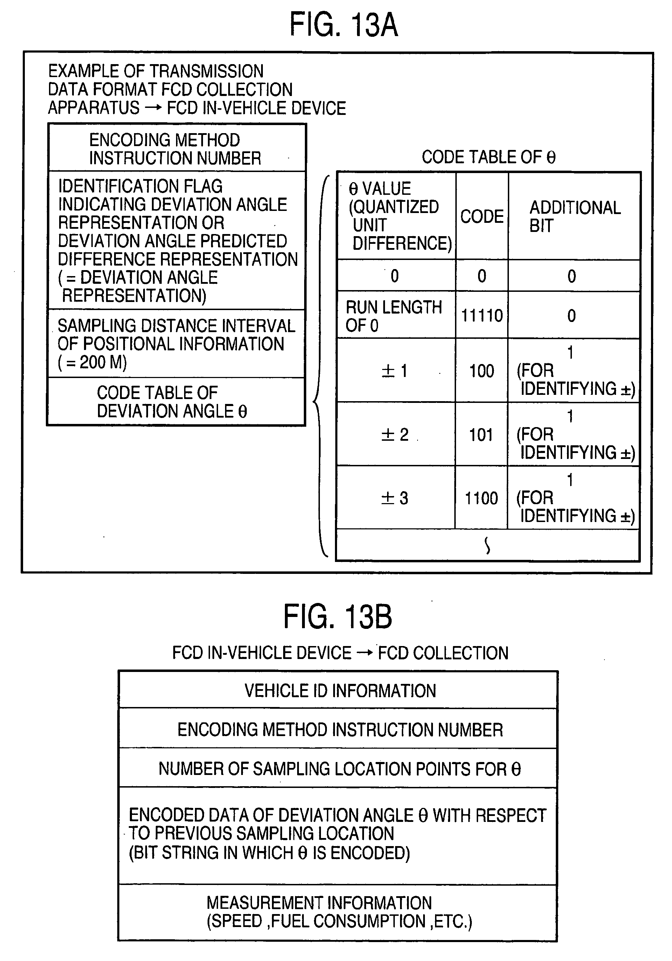

Fig. 13A shows the data structure of encoding instruction information transmitted from the FCD collection apparatus 10 to the FCD in-vehicle device 20, and Fig. 13B shows the data structure of traveling path data transmitted from the FCD in-vehicle device 20 that has received this encoding instruction to the FCD collection apparatus 10.

Thus, this probe car system can perform optimum encoding of traveling path data in the FCD in-vehicle device 20 based on the code table and encoding instruction transmitted from the FCD collection apparatus 10.

The configuration shown in this embodiment can also be applied to the probe car systems of the first embodiment and the second embodiment.

Although the present invention has been described in detail with reference to specific preferred embodiments thereof, it will be apparent to those skilled in the art that various changes and modifications may be made herein without departing from the scope and sprit of the present invention.

The present application is made based on Japanese Patent ApplicationNo. 2003-071737, filedon March 17, 2003, the content of which is incorporated by reference herein.

INDUSTRIAL APPLICABILITY

As is evident from the foregoing description, the traveling path transmitting method of the invention makes it possible to transmit travel paths accurately to a receiving side while reducing the amount of transmission data. Therefore, reduction of communication charges becomes possible because of shortening of data transmission time. In addition, it becomes possible to transmit traveling path data with a wider range or higher accuracy using the same data capacity.

The probe car system and apparatus of the invention can implement this traveling path transmitting method.

**Claims**

1. A traveling path transmitting method for transmitting a traveling path from an FCD in-vehicle device to an FCD collection apparatus, **characterized in that**:

   the FCD in-vehicle device resamples a travel path traveled while measuring positions with a resampling segment length associated with a road shape, represents positional information of sampling points by statistically biased parameters, and variable-length-encodes the parameter values and transmits the values to the FCD collection apparatus; and
   the FCD collection apparatus reproduces the positional information of the sampling points by decoding received data.

2. The traveling path transmitting method according to claim 1, **characterized in that** the traveling path transmitted from the FCD in-vehicle device to the FCD collection apparatus contains segments having resampling segment lengths with different distances.

3. The traveling path transmitting method according to claim 1, **characterized in that** a deviation angle is used as the parameters that represents the positional information of sampling points.

4. The traveling path transmitting method according to claim 1, **characterized in that** a difference value between a deviation angle and a deviation angle statistical prediction value is used as the parameters that represents the positional information of sampling points.

5. The traveling path transmitting method according to claim 1, **characterized in that** the FCD in-vehicle device identifies a road on a map that corresponds to the travel path by map matching, and determines the resampling segment length based on a curvature of the road.

6. The traveling path transmitting method according to claim 1, **characterized in that** the FCD in-vehicle device determines the resampling segment length based on a cumulative value of steering-wheel steering angles within a period in which a unit distance is traveled.

7. The traveling path transmitting method according to claim 1, **characterized in that** the FCD in-vehicle device determines the resampling segment length based on a cumulative value of absolute values of deviation angles measured within a period in which a unit distance is traveled.

8. The traveling path transmitting method according to claim 1, **characterized in that** the FCD in-vehicle device determines the resampling segment length based on a detected value by a lateral G sensor.

9. The traveling path transmitting method according to claim 1, **characterized in that** the FCD in-vehicle device attaches an identification flag to a value that is apt to cause mismatching among the parameters and transmits it to the FCD collection apparatus.

10. The traveling path transmitting method according to claim 9, characteri zed in that the FCD in-vehicle device compares a cumulative value of absolute values of deviation angles that is measured while traveling a travel path between the sampling points with an absolute value of a total value of deviation angles at sampling points preceding and following the travel path, and if a difference therebetween is greater than a predetermined value, attaches the identification flag to the parameter corresponding to positionalinformation of a sampling point located at a foremost end of the travel path.

11. The traveling path transmitting method according to claim 1, **characterized in that** the FCD collection apparatus performs map matching using the reproduced positional information and identifies the travel path of the FCD in-vehicle device.

12. The traveling path transmitting method according to claim 10, **characterized in that** the FCD collection apparatus discards the positional information if the FCD collection apparatus detects positional information to which the identification flag is attached.

13. A probe car system **characterized by** comprising:

    an FCD in-vehicle device that resamples a travel path traveled while measuring positions with a resampling segment length associated with a road shape, represents positional information of sampling points by statistically biased parameters, and variable-length-encodes and transmits the parameter values; and
    an FCD collection apparatus that reproduces the positional information of the sampling points by decoding received data received from the FCD in-vehicle device.

14. The probe car system according to claim 13, **characterized in that** the FCD collection apparatus performs map matching using the reproduced positional information to identify the travel path of the FCD in-vehicle device.

15. The probe car system according to claim 13, **characterized in that** the FCD collection apparatus instructs the FCD in-vehicle device to use a code table and an encoding method for use in variable length encoding.

16. The probe car system according to claim 13, **characterized in that** the FCD in-vehicle device sets the resampling segment length by associating the resampling segment length with a range of road curvature.

17. The probe car system according to claim 13, **characterized in that** the FCD in-vehicle device attaches an identification flag to a value that apt to cause mismatching, and the FCD collection apparatus discards positional information to which the identification flag is attached.

18. The probe car system according to claim 15, **characterized in that** the FCD collection apparatus instructs the FCD in-vehicle device to use an encoding method in which a deviation angle is used as the parameters when the FCD in-vehicle device is located in an urban area.

19. The probe car system according to claim 15, **characterized in that** the FCD collection apparatus instructs the FCD in-vehicle device to use an encoding method that uses, as the parameters, a difference value between a deviation angle and a deviation angle statistical prediction value when the FCD in-vehicle device is located in a mountainous area.

20. The probe car system according to claim 15, **characterized in that** the FCD collection apparatus instructs the FCD in-vehicle device to use an encoding method that uses a deviation angle as the parameters when a past travel path of the FCD in-vehicle device is straight-lined.

21. The probe car system according to claim 15, **characterized in that** the FCD collection apparatus instructs the FCD in-vehicle device to use an encoding method that uses, as the parameters, a difference value between a deviation angle and a deviation angle statistical prediction value when a past travel path of the FCD in-vehicle device is curved-lined.

22. The probe car system according to claim 15, **characterized in that** the FCD collection apparatus instructs the FCD in-vehicle device to use an encoding method in which the resampling segment length is set shorter than normal when the FCD in-vehicle device is traveling in a road built-up area of an urban area.

23. The probe car system according to claim 15, **characterized in that** the FCD collection apparatus instructs an encoding method in which the resampling segment length is set longer than normal when the FCD in-vehicle device is traveling on an expressway or a major road.

24. The probe car system according to claim 15, **characterized in that** the FCD collection apparatus changes the instruction on an encoding method for the FCD in-vehicle device according to a type of the FCD in-vehicle device.

25. The probe car system according to claim 15, **characterized in that** the FCD collection apparatus changes the instruction on an encoding method for the FCD in-vehicle device according to a past travel tendency.

26. An FCD in-vehicle device **characterized by** comprising:

    present vehicle position detecting means for detecting a present position;
    accumulating means for accumulating positional data of a travel path measured by the present vehicle position detecting means;
    resampling segment length determining means for determining a resampling segment length in resampling the travel path;
    traveling path resampling processing means for resampling the travel path with the resampling segment length determined by the resampling segment length determining means and computing positional data of sampling points;
    encoding means for representing the positional data of the sampling point by statistically biased parameters and variable-length-encoding the parameter values; and
    traveling path transmitting means for transmitting the encode data to an FCD collection apparatus.

27. The FCD in-vehicle device according to claim 26, **characterized by** comprising:

    computing means for computing a cumulative value of absolute values of deviation angles in a travel path between the sampling points, and an absolute value of a total value of deviation angles at sampling points preceding and following the travel path; and

determining means for determining a difference between the cumulative value of absolute values of deviation angles in the travel path, computed by the computing means, and the total value of deviation angles in the sampling points; and

**characterized in that** the encoding means attaches an identification flag to the parameter corresponding to positional information of the sampling point located at a foremost end of the travel path if the determining means determines the difference is greater than a predetermined value .

# FIG. 1

RESAMPLE SEGMENT          RESAMPLE SEGMENT

# FIG. 2A

RESAMPLE PATH DATA AT
EQUAL DISTANCE L

# FIG. 2B

REPRESENT ANGLE COMPONENT
BY DEVIATION ANGLE

# FIG. 2C

REPRESENT DEVIATION ANGLE BY
STATISTICAL PREDICTION VALUE DIFFERENCE

# FIG. 2D

FREQUENCY OF OCCURRENCE

-180          0          +180          $\Theta,\Delta$

## FIG. 3

| SPECIAL CODE | | CODE | ADDITIONAL BIT | |
|---|---|---|---|---|
| SEGMENT LENGTH CHANGE CODE | | 101 | 3(40/80/160/···/5120m | |
| EOD CODE | | 1100 | 0 | |
| INPUT VALUE | | CODE | ADDITIONAL BIT | RANGE OF Δθ VALUE (°) |
| RUN LENGTH | Δθ VALUE(°) | | | |
| 0 | 0 | 0 | 0 | −1 ~ +1 |
| 5 | 0 | 100 | 0 | // |
| 10 | 0 | 1101 | 0 | // |
| 0 | ±3 | 1110 | 1 (FOR IDENTIFYING ±) | ±2~4 |
| 0 | ±6 | 111100 | 1 (FOR IDENTIFYING ±) | ±5~7 |
| 0 | ±9 | 111101 | 1 (FOR IDENTIFYING ±) | ±8~10 |
| ⟨ | | | | |

EP 1 605 419 A1

# FIG. 4

FCD COLLECTION APPARATUS (CENTER) — 10

| | |
|---|---|
| | TRAVELING PATH MEASUREMENT INFORMATION UTILIZING SECTION 13 |
| CODE TABLE 14 (No. 2) (No. N) 11 | ENCODED DATA DECODING SECTION 12 |
| | TRAVELING PATH RECEIVING SECTION |

FCD IN-VEHICLE DEVICE — 20

TRAVELING PATH TRANSMITTING SECTION 21

CODE TABLE (No. X) 23

ENCODING PROCESSING SECTION 22

TRAVELING PATH RESAMPLING SECTION 24

SENSOR A (SPEED) 33

RESAMPLING LENGTH DETERMINING SECTION 27

TRAVELING PATH MEASUREMENT INFORMATION ACCUMULATING SECTION 25

SENSOR B (STEERING ANGLE) 34

GPS ANTENNA 31

SENSOR C (LATERAL G) 35

MAP DB 28

PRESENT VEHICLE POSITION DETERMINING MEANS 26

GYRO 32

# FIG. 5

EXAMPLE OF TRANSMISSION DATA FORMAT

| |
|---|
| VEHICLE ID INFORMATION |
| IDENTIFICATION NUMBER OF THE CODE TABLE IN USE |
| ENCODING METHOD INSTRUCTION NUMBER |
| NUMBER OF SAMPLING LOCATION POINTS OF POSITIONAL INFORMATION |
| ABSOLUTE LONGITUDE AND LATITUDE OF THE LAST MEASURED LOCATION |
| ABSOLUTE ORIENTATION OF BETWEEN LAST LOCATION → PREVIOUS LOCATION |
| ENCODED DATA OF TRAVELING PATH (INCLUDING BIT STRING OF ENCODED $\theta$, $\Delta\theta j$ ; AND SEGMENT LENGTH CHANGE CODE) |

# FIG. 6

PARALLEL SIDE ROAD
ALONG MAJOR ROAD

B

TRAVEL PATH

C

DEVIATION ANGLE θ

MAJOR ROAD

A

• • • RESAMPLED PATH
CONFIGURATION

# FIG. 7A

# FIG. 7B

# FIG. 8

| SPECIAL CODE | CODE | ADDITIONAL BIT | |
|---|---|---|---|
| SEGMENT LENGTH CHANGE CODE | 101 | 3 (40/80/160/···/5120m) | |
| CODE INDICATING THAT A DIFFERENCE HAS OCCURRED BETWEEN DEVIATION ANGLE OF RESAMPLED TRAVELING PATH SHAPE AND CUMULATIVE VALUE OF DEVIATION ANGLE ABSOLUTE VALUES | 111110 | 9 (0~512° ) CUMULATIVE VALUE OF DEVIATION ANGLE ABSOLUTE VALUES OF TRAVELING PATH | |
| EOD CODE | 1100 | 0 | |

| INPUT VALUE | | CODE | ADDITIONAL BIT | RANGE OF θ VALUE (° ) |
|---|---|---|---|---|
| RUN LENGTH | θ VALUE | | | |
| 0 | 0 | 0 | 0 | − 1 ~ ± 1 |
| 5 | 0 | 100 | 0 | 〃 |
| 10 | 0 | 1101 | 0 | 〃 |
| 0 | ± 3 | 1110 | 1 (FOR IDENTIFYING ± ) | ± 2~4 |
| 0 | ± 6 | 111100 | 1 (FOR IDENTIFYING ± ) | ± 5~7 |
| 0 | ± 9 | 111101 | 1 (FOR IDENTIFYING ± ) | ± 8~10 |
| | | | 〳 | |

EP 1 605 419 A1

# FIG. 9

FCD COLLECTION
APPARATUS (CENTER)                    ~10

TRAVELING PATH
MEASUREMENT
INFORMATION
UTILIZING SECTION

CODE TABLE ←→ ENCODED DATA
DECODING SECTION

(No. 2)

(No. N)

TRAVELING PATH
RECEIVING SECTION

FCD IN-VEHICLE DEVICE     TRAVELING PATH     ~20
TRANSMITTING SECTION

CODE TABLE ←→ ENCODING
(No. X)                  22~  PROCESSING SECTION

TRAVELING-PATH &
RESAMPLING-SEGMENT
DEVIATION-ANGLE
ABSOLUTE-VALUE
DIFFERENCE
42~  DETERMINING SECTION

TRAVELING PATH
RESAMPLING
24~  PROCESSING SECTION

41

SENSOR A
(SPEED)

TRAVELING-PATH &
RESAMPLING-SEGMENT
DEVIATION-ANGLE
ABSOLUTE-VALUE
CUMULATIVE-VALUE
COMPUTING SECTION

TRAVELING PATH
MEASUREMENT
INFORMATION
ACCUMULATING
SECTION

SENSOR B
(STEERING
ANGLE)

GPS
ANTENNA

25

MAP DB

PRESENT VEHICLE
POSITION DETERMINING
MEANS

SENSOR C
(LATERAL G)

GYRO

FIG. 10

START

ACCUMULATE
TRAVELING PATH — ST1

EXECUTE EQUAL-DISTANCE
RESAMPLING — ST2

N = 1 — ST3

SELECT N-TH LINK — ST4

TRAVEL PATH IN RESPECTIVE
EQUAL-DISTANCE RESAMPLING — ST5

DEVIATION ANGLE PRECEDING/
FOLLOWING THE APPLICABLE
RESAMPLE LINK — ST6

ST7

IS THE DIFFERENCE
BETWEEN A AND | B |
LARGE? — LARGER

SMALL — ST8

NO OPERATION

SET IDENTIFICATION MARKER — ST9

ST10

N = N + 1

PROCESS COMPLETED
FOR ALL THE LINKS?

YES — ST11

EXECUTE ENCODING PROCESS

END

**FIG. 11**

EP 1 605 419 A1

# FIG. 12

| CODE TABLE CREATING SECTION | FCD COLLECTION APPARATUS | FCD IN-VEHICLE DEVICE |
|---|---|---|
| START | START ST31 | START ST41 |

**CODE TABLE CREATING SECTION**

ST21 — N = 1, M = 1

ST22 — PICK OUT AND TOTAL PAST PATH OF AREA N AND IN-VEHICLE DEVICE TYPE M

ST29
PROCEED TO COMPUTATION FOR NEXT AREA OR IN-VEHICLE TYPE

ST23 — COMPUTE θj AND Δθj OF RESPECTIVE NODES ACCORDING TO STATISTICAL VALUE COMPUTING EQUATION

CALCULATE DISTRIBUTION OF θj AND Δθj

ST24

ST25 — CALCULATE DISTRIBUTION OF RUN LENGTHS

ST26 — CREATE CODE TABLE BASED ON DISTRIBUTIONS OF θj, ΔθJ, AND RUN LENGTHS

ST27 — COMPLETE CODE TABLE OF AREA N AND TYPE M

ST28
NO — PROCESS COMPLETED FOR ALL THE AREAS AND TYPES?

YES

END

**FCD COLLECTION APPARATUS**

RECEIVE POSITION AND IN-VEHICLE DEVICE TYPE INFORMATION

ST42

TRANSMIT INSTRUCTION ON USE OF CODE TABLE AND DEVIATION ANGLE/DEVIATION ANGLE PREDICTED DIFFERENCE VALUE ACCORDING TO POSITION AND IN-VEHICLE DEVICE TYPE AND INSTRUCTION ON RESAMPLE INTERVAL

ST32  ST33

RECEIVE TRAVELING PATH

TRANSMIT INSTRUCTION ON USE OF CODE TABLE AND DEVIATION ANGLE/DEVIATION ANGLE PREDICTED DIFFERENCE VALUE ACCORDING TO POSITION, IN-VEHICLE DEVICE TYPE, AND PATH CONDITION AND INSTRUCTION ON RESAMPLE INTERVAL ST34

REPRODUCE TRAVEL TRAJECTORY REFERRING TO TRANSMITTED CODE TABLE ST35

PERFORM UTILIZATION PROCESS OF FCD INFORMATION, SUCH AS GENERATION OR ACCUMULATION OF TRAFFIC INFORMATION ST36

**FCD IN-VEHICLE DEVICE**

NOTIFY CENTER OF POSITION AND IN-VEHICLE DEVICE TYPE

RECEIVE CODE TABLE AND INSTRUCTION

MEASURE PRESENT POSITION AT GIVEN TIME AND ACCUMULATE TRAVEL TRAJECTORY DATA

ST44

ST43 NO — TRANSMISSION TIMING ?

ST45 YES

ENCODE TRAVEL TRAJECTORY DATA REFERRING TO CODE TABLE

TRANSMIT TRAVELING PATH

ST46

EP 1 605 419 A1

# FIG. 13A

EXAMPLE OF TRANSMISSION
DATA FORMAT FCD COLLECTION
APPARATUS → FCD IN-VEHICLE DEVICE

| ENCODING METHOD INSTRUCTION NUMBER |
| --- |
| IDENTIFICATION FLAG INDICATING DEVIATION ANGLE REPRESENTATION OR DEVIATION ANGLE PREDICTED DIFFERENCE REPRESENTATION ( = DEVIATION ANGLE REPRESENTATION) |
| SAMPLING DISTANCE INTERVAL OF POSITIONAL INFORMATION ( = 200 M) |
| CODE TABLE OF DEVIATION ANGLE θ |

CODE TABLE OF θ

| θ VALUE (QUANTIZED UNIT DIFFERENCE) | CODE | ADDITIONAL BIT |
| --- | --- | --- |
| 0 | 0 | 0 |
| RUN LENGTH OF 0 | 11110 | 0 |
| ± 1 | 100 | 1 (FOR IDENTIFYING ±) |
| ± 2 | 101 | 1 (FOR IDENTIFYING ±) |
| ± 3 | 1100 | 1 (FOR IDENTIFYING ±) |
| ∫ | | |

# FIG. 13B

FCD IN-VEHICLE DEVICE → FCD COLLECTION

| VEHICLE ID INFORMATION |
| --- |
| ENCODING METHOD INSTRUCTION NUMBER |
| NUMBER OF SAMPLING LOCATION POINTS FOR θ |
| ENCODED DATA OF DEVIATION ANGLE θ WITH RESPECT TO PREVIOUS SAMPLING LOCATION (BIT STRING IN WHICH θ IS ENCODED) |
| MEASUREMENT INFORMATION (SPEED ,FUEL CONSUMPTION ,ETC.) |

# FIG. 14

| INTERNATIONAL SEARCH REPORT | | International application No. |
|---|---|---|
| | | PCT/JP2004/003550 |

| A. CLASSIFICATION OF SUBJECT MATTER |
|---|
| Int.Cl⁷ G08G1/13 |
| According to International Patent Classification (IPC) or to both national classification and IPC |

Int.Cl$^7$ G08G1/13

According to International Patent Classification (IPC) or to both national classification and IPC

| B. FIELDS SEARCHED |
|---|
| Minimum documentation searched (classification system followed by classification symbols) |
| Int.Cl$^7$ G08G1/123-1/13, G01C21/00 |
| Documentation searched other than minimum documentation to the extent that such documents are included in the fields searched |
| Jitsuyo Shinan Koho 1922–1996 Jitsuyo Shinan Toroku Koho 1996–2004 |
| Kokai Jitsuyo Shinan Koho 1971–2004 Toroku Jitsuyo Shinan Koho 1994–2004 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| Y | JP 2003-51093 A (The Nippon Signal Co., Ltd.), 21 February, 2003 (21.02.03), Par. Nos. [0025] to [0030] (Family: none) | 1-8,11, 13-16,24,26 |
| Y | JP 2003-23357 A (Matsushita Electric Industrial Co., Ltd.), 24 January, 2003 (24.01.03), Par. Nos. [0012] to [0026] & WO 02/091587 A1 & US 2003/0093221 A1 | 1-8,11, 13-16,24,26 |
| Y | JP 10-157587 A (Mitsubishi Motors Corp.), 16 June, 1998 (16.06.98), Par. No. [0043] (Family: none) | 5-8,16 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 June, 2004 (15.06.04) | 29 June, 2004 (29.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

27

**INTERNATIONAL SEARCH REPORT**

| International application No. |
|---|
| PCT/JP2004/003550 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-102052 A  (Fujitsu Ten Ltd.),<br>12 April, 1994(12.04.94),<br>Par. No. [0013]<br>(Family: none) | 6 |
| A | JP 2001-349738 A  (Alpine Electronics, Inc.),<br>21 December, 2001 (21.12.01),<br>Par. No. [0020]<br>(Family: none) | 1-8,10-16,<br>18-27 |

Form PCT/ISA/210 (continuation of second sheet) (January 2004)

| INTERNATIONAL SEARCH REPORT | International application No. |
|---|---|
| | PCT/JP2004/003550 |

**Box No. II      Observations where certain claims were found unsearchable (Continuation of item 2 of first sheet)**

This international search report has not been established in respect of certain claims under Article 17(2)(a) for the following reasons:

1. ☐  Claims Nos.:
   because they relate to subject matter not required to be searched by this Authority, namely:

2. ☒  Claims Nos.: 9, 17
   because they relate to parts of the international application that do not comply with the prescribed requirements to such an extent that no meaningful international search can be carried out, specifically:
   Claims 9 and 17 include an expression "a value which easily causes miss-matching" which lacks in clarity within the meaning of PCT Article 6 even if the technical common sense obtainable at the time of the application is considered.

3. ☐  Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

1. ☐  As all required additional search fees were timely paid by the applicant, this international search report covers all searchable claims.

2. ☐  As all searchable claims could be searched without effort justifying an additional fee, this Authority did not invite payment of any additional fee.

3. ☐  As only some of the required additional search fees were timely paid by the applicant, this international search report covers only those claims for which fees were paid, specifically claims Nos.:

4. ☐  No required additional search fees were timely paid by the applicant.   Consequently, this international search report is restricted to the invention first mentioned in the claims; it is covered by claims Nos.:

**Remark on Protest**        ☐   The additional search fees were accompanied by the applicant's protest.

☐   No protest accompanied the payment of additional search fees.

Form PCT/ISA/210 (continuation of first sheet (2)) (January 2004)